# EUROPÄISCHE PATENTSCHRIFT

(11) **EP 2 826 647 B1**
(45) Veröffentlichungstag und Bekanntmachung des Hinweises auf die Patenterteilung: **28.03.2018**
(21) Anmeldenummer: 14165649.6
(22) Anmeldetag: 23.04.2014
(51) Int. Cl.: B60H 1/00

(54) **Landwirtschaftliche Arbeitsmaschine**
Agricultural work machine
Machine de travail agricole

(30) Priorität: 19.07.2013 DE 102013012028
(43) Veröffentlichungstag der Anmeldung: 21.01.2015
(73) Patentinhaber: CLAAS Selbstfahrende Erntemaschinen GmbH, 33428 Harsewinkel (DE)
(72) Erfinder: Eggenhaus, Georg, 48369 Saerbeck (DE); Escher, Matthias, 49134 Wallenhorst-Rulle (DE); Hüsing, Martin, 33428 Harsewinkel (DE); Bölling, Ralf, 33803 Steihagen-Brockhagen (DE)

(56) Entgegenhaltungen:
- EP-A1- 2 474 672
- EP-A1- 2 532 541
- DE-A1- 19 803 887
- DE-A1-102011 014 683
- US-A- 5 911 624

## Beschreibung

Die vorliegende Erfindung betrifft eine landwirtschaftliche Arbeitsmaschine mit einer Fahrerkabine und einer diese kühlenden Klimaanlage.

Aus DE 198 39 477 A1 ist ein Kraftfahrzeug bekannt, bei dem zum Abführen von Verlustwärme eines Bauteils, namentlich einer Leistungselektronik, dem Bauteil ein zum Verdampfer einer Fahrzeugklimaanlage paralleler Verdampfer zugeordnet ist.

Die Verdampfungstemperatur in einem solchen Verdampfer ist im Allgemeinen die gleiche wie in einem die Fahrgastzelle kühlenden Verdampfer. Während die Verdampfungstemperatur im Verdampfer der Fahrzeugklimaanlage deutlich unterhalb von ca. 20°C liegen muss, um ein angenehmes Klima in einer Fahrerkabine aufrecht erhalten zu können, funktionieren elektronische Bauteile im Allgemeinen auch bei deutlich höheren, für die Fahrzeuginsassen unangenehmen Temperaturen einwandfrei. Der Anteil des flüssigen Kältemittels, der in den dem zu kühlenden Bauteil zugeordneten Verdampfer gelangt, steht zum Kühlen der Fahrgastzelle nicht mehr zur Verfügung und beeinträchtigt dadurch die Wirkung der Klimaanlage. Infolge der niedrigen Verdampfungstemperatur des Kältemittels ist der Temperaturgradient zwischen dem Verdampfer des zu kühlenden Bauteils und der Umgebung groß, und es wird viel Leistung zu seiner Aufrechterhaltung benötigt. Wenn die Temperatur des Verdampfers niedriger ist als zum Halten des Bauteils auf einer geeigneten Betriebstemperatur erforderlich, dann wird nutzlos Energie verbraucht. Das Dokument EP 2 532 541 A1 zeigt eine landwirtschaftliche Arbeitsmaschine gemäß Oberbegriff des Anspruchs 1.
Das Dokument DE 198 03 887 A1 zeigt die Kühlung eines Stauraumes in einem PKW durch Wärmeaustausch mit einer vom Verdampfer zum Verdichter führenden Rücklaufleitung. Aufgabe der Erfindung ist, eine landwirtschaftliche Arbeitsmaschine mit einer Klimaanlage zu schaffen, die eine energieeffiziente Kühlung nicht nur einer Fahrerkabine sondern auch wenigstens einer anderen zu kühlenden Baugruppe erlaubt.

Die Aufgabe wird durch eine landwirtschaftliche Arbeitsmaschine gemäß Anspruch 1 gelöst, indem bei einer landwirtschaftlichen Arbeitsmaschine mit einer Fahrerkabine und einer Klimaanlage, die einen die Fahrerkabine kühlenden Verdampfer, einen Wärme abgebenden Verflüssiger und einen Verdichter umfasst, wenigstens eine zu kühlende Staukiste mit einem Aufbewahrungsbehälter für bewegliche Teile an einer vom Verdampfer zum Verdichter führenden Rücklaufleitung angeordnet ist.

Die Rücklaufleitung ist gekühlt durch das in ihr zirkulierende, vom Verdampfer herrührende gasförmige Kältemittel. Die Temperatur dieses Kältemittels ist im Allgemeinen höher als die Verdampfungstemperatur, und seine Wärmekapazität ist im Vergleich zum flüssigen Kältemittel im Verdampfer gering. Da jedoch auch bei leistungsstarken elektronischen Komponenten die Verlustleistung im Allgemeinen deutlich kleiner ist als der Wärmeeintrag in die Fahrerkabine durch Sonneneinstrahlung, genügt im Allgemeinen ein geringer Bruchteil der Nennleistung der Klimaanlage, um auch die Kühlung einer solchen Baugruppe zu gewährleisten. Indem die Baugruppe in thermischem Kontakt mit der Rücklaufleitung angeordnet ist, kann sie zwar eventuell nicht auf einer so niedrigen Temperatur gehalten werden wie die Fahrerkabine, doch ist dies, wie oben dargelegt, für das ordnungsgemäße Funktionieren nicht erforderlich und im Sinne eines energiesparenden Betriebs auch nicht erwünscht. Viel mehr erlaubt es die vorliegende Erfindung, "Restkälte" des aus dem Verdampfer abgesaugten Kältemittelgases, die zum Kühlen der Fahrerkabine nicht mehr nutzbar ist, noch einer sinnvollen Nutzung zuzuführen, so dass zum Kühlen der Baugruppe keine zusätzliche Energie benötigt wird.

Vorzugsweise umfasst die zu kühlende Baugruppe ein wärmeisolierendes Gehäuse, durch das die Rücklaufleitung verläuft. So kann das Innere des Gehäuses auch bei geringer Restkühlleistung der hindurch verlaufenden Leitung auf niedriger Temperatur gehalten werden.

Das Gehäuse kann einen Ventilator enthalten, um einen schnellen und effizienten Wärmeaustausch zwischen einer Wärmequelle wie etwa einem elektronischen Gerät und der Kältemittelleitung aufrecht zu erhalten, auch wenn beide nicht in unmittelbarem Kontakt miteinander sind.

Um sicherzustellen, dass empfindliche, insbesondere Spannung führende Komponenten in dem Gehäuse nicht mit Kondenswasser in Berührung kommen, das sich an der Rücklaufleitung oder einer mit ihr in thermischem Kontakt stehenden kalten Oberfläche niederschlägt, kann das Gehäuse einen Kondensatabscheider enthalten.

Um die Beseitigung von Kondenswasser zu ermöglichen, ist der Kondensatabscheider vorzugsweise mit einer ins Freie führenden Ablaufleitung verbunden.

Das Gehäuse kann zweckmäßigerweise eine durch einen Deckel oder eine Klappe verschließbare Öffnung aufweisen. Insbesondere bei Vorhandensein einer solchen Öffnung, die den Zutritt von feuchter Außenluft in das Gehäuse ermöglicht, ist der oben beschriebene Kondensatabscheider zweckmäßig.

Der Deckel oder die Klappe können an der Karosserie der Arbeitsmaschine freiliegend angeordnet sein, um einen Zugriff von außen auf das Innere des Gehäuses zu ermöglichen. Erfindungsgemäß umfasst die zu kühlende Baugruppe einen Aufbewahrungsbehälter für bewegliche Teile, insbesondere für Werkzeug. Ein solcher Aufbewahrungsbehälter erzeugt keine Abwärme, die durch thermischen Kontakt mit der Rücklaufleitung abgeführt werden müsste. Dennoch kann er bei herkömmlichen landwirtschaftlichen Arbeitsmaschinen hohe Temperaturen erreichen, wenn er bzw. ein Gehäuse, in dem er untergebracht ist, während des Betriebs der Maschine starker Sonneneinstrahlung oder dem Zustrom von Abwärme anderer Baugruppen der Arbeitsmaschine ausgesetzt ist. Erfindungsgemäß kann durch den thermischen Kontakt mit der Rücklaufleitung auf einfache Weise sichergestellt werden, dass der Aufbewahrungsbehälter bzw. dessen Inhalt eine Grenztemperatur nicht überschreiten kann, so dass im Bedarfsfall das Werkzeug eine Temperatur hat, bei der es sicher benutzt werden kann.

Einer zweiten Ausgestaltung zufolge umfasst die zu kühlende Baugruppe einen elektronischen Sensor, insbesondere eine Kamera.

Ein solcher Sensor kann insbesondere an einem Erntegutkanal der Arbeitsmaschine angeordnet sein, um einen Parameter des Ernteguts zu erfassen.

Als Arbeitsmaschine kommen insbesondere ein Mähdrescher, ein Feldhäcksler oder ein Traktor in Betracht.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen Traktor als Beispiel einer erfindungsgemäßen landwirtschaftlichen Arbeitsmaschine;
- Fig. 2: ein Blockdiagramm einer Klimaanlage des Traktors;
- Fig. 3: ein Detail des Traktors in einer schematischen Schnittdarstellung;
- Fig. 4: das Detail der Fig. 3 gemäß einer zweiten Ausgestaltung; und
- Fig. 5: ein Sensorgehäuse gemäß einer dritten Ausgestaltung der Erfindung.

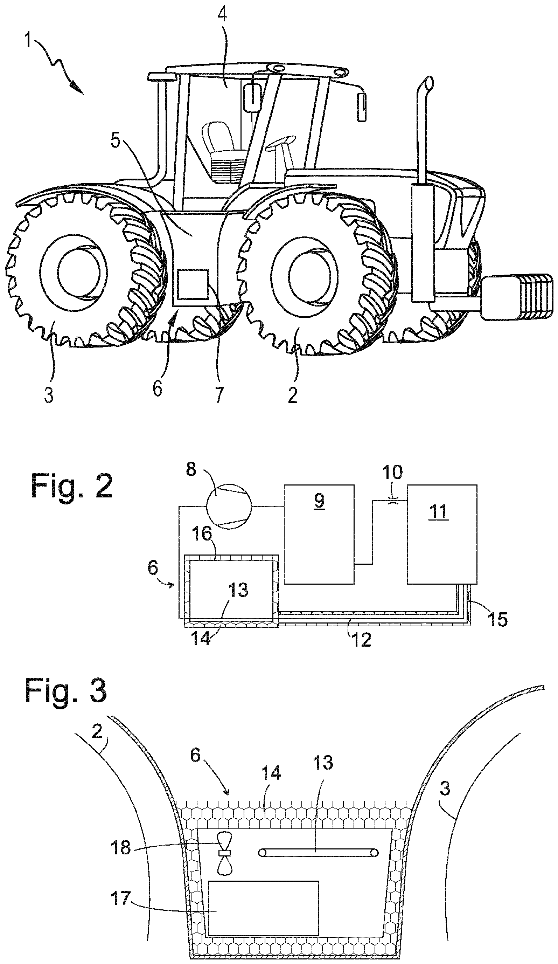

Fig. 1 zeigt einen Traktor 1 von an sich bekannter Bauart. An der in der Figur gezeigten, in Bezug auf die normale Fahrtrichtung des Traktors 1 rechten Seite ist in einem Zwischenraum zwischen Vorderrad 2 und Hinterrad 3, unterhalb einer Fahrerkabine 4, ein Gehäuse 5 angeordnet, das in einem oberen Bereich Platz für einen Abgaskatalysator bietet. Der Abgaskatalysator arbeitet bei hoher Temperatur, und seine Wärme verteilt sich im Betrieb in seiner Umgebung und erreicht insbesondere eine einen unteren Teil des Gehäuses 5 einnehmende Staukiste 6. Die Staukiste 6 weist eine freiliegende Klappe 7 auf, die aufgeschwenkt werden kann, um auf das Innere der Staukiste 6, insbesondere auf darin untergebrachtes Werkzeug, zuzugreifen.

Eine Klimaanlage ist vorgesehen, um während des Feldeinsatzes die Fahrerkabine 4 auf einer angenehmen Temperatur zu halten.

Die Klimaanlage umfasst, wie in dem Blockdiagramm der Fig. 2 dargestellt, einen Verdichter 8, der unmittelbar oder mittelbar durch einen Dieselmotor des Traktors 1 angetrieben ist, einen Verflüssiger 9, in welchem von dem Verdichter 8 verdichtetes und dabei adiabatisch erwärmtes Kältemittel Wärme an die Umgebung abgibt, einen Verdampfer 11 zum Kühlen der Fahrerkabine 4, eine Drosselstelle 10, die in einer Verbindungsleitung zwischen Verflüssiger 9 und Verdampfer 11 angeordnet ist, um eine Druckdifferenz zwischen beiden aufrecht zu erhalten und so eine niedrigere Verdampfungstemperatur im Verdampfer 11 zu gewährleisten, sowie eine Saugleitung 12, die Kältemitteldampf vom Verdampfer 11 zum Verdichter 8 zurückführt. Die Saugleitung 12 umfasst einen Abschnitt 13, der sich innerhalb einer wärmedämmenden Umhüllung 14 der Staukiste 6 erstreckt und dadurch Wärme aus der Staukiste 6 abführen kann. Zumindest zwischen dem Verdampfer 11 und dem Abschnitt 13 ist die Saugleitung 12 mit einem isolierenden Mantel 15 versehen, um eine unnötige Erwärmung des Kältemittels auf dem Weg vom Verdampfer 11 zum Abschnitt 13 unabhängig von der Länge dieses Wegs zu vermeiden. Vorzugsweise ist die Saugleitung 12 auf ihrer gesamten Länge, bis hin zum Verdichter 8, ummantelt.

Die isolierende Umhüllung 14 der Staukiste 6 muss eine ausreichende Stärke haben, um eine gute Isolierung zu erreichen. Als Material der Umhüllung 14 kommt, insbesondere in der näheren Umgebung des Katalysators, ein mineralisches Material, etwa Glaswolle, in Betracht; an einer vom Katalysator abgewandten Seite der Staukiste 6 könnte auch ein aufgeschäumter Kunststoff verwendet werden.

Fig. 3 zeigt einen schematischen Schnitt durch die zwischen den Rädern 2, 3 angeordnete Staukiste 6 gemäß einer ersten Ausgestaltung. Über einem Behälter 17 für das Werkzeug ist in der Staukiste 6 ein Ventilator 18 montiert, um Luftzirkulation in der Staukiste 6, insbesondere entlang des (hier längs aufgeschnitten dargestellten) Saugleitungsabschnitts 13, anzutreiben. So können Temperaturgradienten innerhalb der Staukiste 6 gering gehalten werden, und die Wahrscheinlichkeit, das sich an einer kalten Stelle der Staukiste 6 Kondenswasser niederschlägt, ist gering.

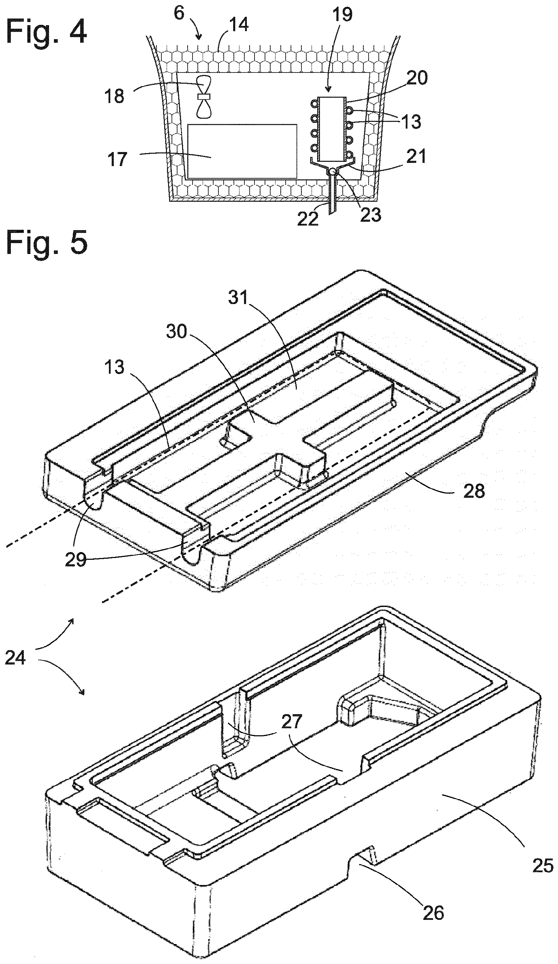

Einer in Fig. 4 dargestellten zweiten Ausgestaltung der Staukiste 6 zufolge verläuft der Saugleitungsabschnitt 13 über einen Kondensatabscheider 19. Der Kondensatabscheider 19 umfasst hier ein im Wesentlichen vertikal orientiertes, geräumiges Rohr 20, auf dem sich der Saugleitungsabschnitt 13 schraubenlinienförmig erstreckt. Kondenswasser, das sich an dem Rohr 20 im Betrieb niederschlägt, wird von einer darunter angeordneten Schale 21 aufgefangen. Ein Abfluss der Schale 21 führt über eine Rohrleitung 22 nach unten aus der Staukiste 6 ins Freie. Die Rohrleitung 22 ist normalerweise durch einen Schwimmer 23 am Boden der Schale 21 verschlossen. Nur wenn sich Kondenswasser in der Schale 21 sammelt und dem Schwimmer 23 Auftrieb gibt, hebt sich dieser von seinem Sitz und lässt das Kondenswasser über die Rohrleitung 22 entweichen. So ist sichergestellt, dass, auch wenn durch wiederholtes Öffnen der Klappe 7 Luftfeuchtigkeit in größerer Menge in die Staukiste 6 gelangt, sich kein störendes Kondenswasser dort sammeln kann.

Fig. 5 zeigt ein wärmeisolierendes Gehäuse 24 für ein elektronisches Gerät, insbesondere für eine Kamera, die an einem Erntegutkanal einer landwirtschaftlichen Arbeitsmaschine, insbesondere eines Mähdreschers oder Feldhäckslers, angeordnet ist, um die Qualität des Ernteguts zu überwachen.

Das Gehäuse 24 kann preiswert aus Kunststoff-Hartschaum, insbesondere aus expandiertem Polystyrol oder dergleichen, geformt sein. Eine untere Schale 25 des Gehäuses ist an ihrer Bodenseite mit einem Sichtfenster 26 für ein Objektiv der (nicht dargestellten) Kamera versehen. Konturen im Inneren der Schale wie etwa Nuten 27 in den Seitenwänden, ermöglichen eine formschlüssige Fixierung der Kamera. Eine obere Schale 28 des Gehäuses 24 ist mit zwei Randausschnitten 29 für den Durchtritt der Saugleitung 12 versehen. Deren Abschnitt 13, dargestellt als strichpunktierte Linie, verläuft in einer Vertiefung 31 im Inneren der oberen Schale 28 u-förmig um einen zentralen Vorsprung 30, der, wenn die Schalen 24, 28 zusammengefügt sind, eine Rückseite der Kamera abstützt.

Dank der Kühlwirkung des Leitungsabschnitts 13 kann das Gehäuse 24 mit der Kamera an Stellen im Innern der Arbeitsmaschine angebracht werden, die im Betrieb hohe, einen ungeschützten Betrieb der Kamera nicht zulassende Temperaturen erreichen.

Da das Gehäuse 24 im Betrieb nicht geöffnet zu werden braucht, ist die Gefahr, dass sich Kondenswasser am Abschnitt 13 niederschlägt, gering. Die Gefahr kann zusätzlich dadurch verringert werden, dass das Objektiv der Kamera das Sichtfenster 26 dicht ausfüllt oder die Kamera selbst im zusammengebauten Zustand die obere Schale 28 dicht genug verschließt, um den Zutritt von feuchter Luft zu der den Abschnitt 13 aufnehmenden Vertiefung 31 zu unterbinden.

### Bezugszeichen

- 1: Traktor
- 2: Vorderrad
- 3: Hinterrad
- 4: Fahrerkabine
- 5: Gehäuse
- 6: Staukiste
- 7: Klappe
- 8: Verdichter
- 9: Verflüssiger
- 10: Drosselstelle
- 11: Verdampfer
- 12: Saugleitung
- 13: Abschnitt
- 14: Umhüllung
- 15: Mantel
- 17: Behälter
- 18: Ventilator
- 19: Kondensatabscheider
- 20: Rohr
- 21: Schale
- 22: Rohrleitung
- 23: Schwimmer
- 24: Gehäuse
- 25: untere Schale
- 26: Sichtfenster
- 27: Nut
- 28: obere Schale
- 29: Randausschnitt
- 30: Vorsprung
- 31: Vertiefung

## Patentansprüche

1. Landwirtschaftliche Arbeitsmaschine mit einer Fahrerkabine (4) und einer Klimaanlage, die einen die Fahrerkabine kühlenden Verdampfer (11), einen Wärme abgebenden Verflüssiger (9) und einen Verdichter (8) umfasst, und einem unterhalb der Fahrerkabine angeordneten Gehäuse (5), wobei das Gehäuse (5) der landwirtschaftlichen Arbeitsmaschine in einem unteren Teil von einer Staukiste (6) eingenommen wird, **dadurch gekennzeichnet, dass** die Staukiste (6) einen Aufbewahrungsbehälter (17) für bewegliche Teile, insbesondere für Werkzeug, umfasst und an einer vom Verdampfer (11) zum Verdichter (8) führenden Rücklaufleitung (12) angeordnet ist.

2. Landwirtschaftliche Arbeitsmaschine nach Anspruch 1, **dadurch gekennzeichnet, dass** die zu kühlende Baugruppe ein wärmeisolierendes Gehäuse (6; 24) umfasst und die Rücklaufleitung (12,13) durch das Gehäuse (14; 24) verläuft.

3. Landwirtschaftliche Arbeitsmaschine nach Anspruch 2, **dadurch gekennzeichnet, dass** das wärmeisolierende Gehäuse (6) einen Ventilator (18) enthält.

4. Landwirtschaftliche Arbeitsmaschine nach Anspruch 2 oder 3, **dadurch gekennzeichnet, dass** das wärmeisolierende Gehäuse (6) einen Kondensatabscheider (19) enthält.

5. Landwirtschaftliche Arbeitsmaschine nach Anspruch 4, **dadurch gekennzeichnet, dass** der Kondensatabscheider (19) mit einer ins Freie führenden Ablaufleitung (22) verbunden ist.

6. Landwirtschaftliche Arbeitsmaschine nach Anspruch 2, 3 oder 4, **dadurch gekennzeichnet, dass** das wärmeisolierende Gehäuse (6) eine durch einen Deckel oder eine Klappe (7) verschließbare Öffnung aufweist.

7. Landwirtschaftliche Arbeitsmaschine nach Anspruch 6, **dadurch gekennzeichnet, dass** der Deckel oder die Klappe (7) an der Karosserie der Arbeitsmaschine freiliegend angeordnet ist.

8. Landwirtschaftliche Arbeitsmaschine nach einem der Ansprüche 1 bis 7, **dadurch gekennzeichnet, dass** die zu kühlende Baugruppe einen elektronischen Sensor, insbesondere eine Kamera, umfasst.

9. Landwirtschaftliche Arbeitsmaschine nach Anspruch 7, **dadurch gekennzeichnet, dass** der Sensor an einem Erntegutkanal der Arbeitsmaschine angeordnet ist, um einen Parameter des Ernteguts zu erfassen.

10. Landwirtschaftliche Arbeitsmaschine nach einem der vorhergehenden Ansprüche, **dadurch gekennzeichnet, dass** sie ein Mähdrescher, ein Feldhäcksler oder ein Traktor (1) ist.

## Claims

1. An agricultural working machine having a driver's cab (4) and an air conditioning system which includes an evaporator (11) for cooling the driver's cab, a condenser (9) which gives off heat and a compressor (8), and a housing (5) arranged beneath the driver's cab, wherein the housing (5) of the agricultural working machine is accommodated in a lower part by a storage box (6), **characterised in that** the storage box (6) includes a storage container (17) for moveable parts, in particular for tools, and is arranged at a return line (12) leading from the evaporator (11) to the compressor (8).

2. An agricultural working machine according to claim 1 **characterised in that** the assembly to be cooled includes a heat-insulating housing (6; 24) and the return line (12, 13) extends through the housing (14; 24).

3. An agricultural working machine according to claim 2 **characterised in that** the heat-insulating housing (6) includes a fan (18).

4. An agricultural working machine according to claim 2 or claim 3 **characterised in that** the heat-insulating housing (6) includes a condensate separator (19).

5. An agricultural working machine according to claim 4 **characterised in that** the condensate separator (19) is connected to a discharge line (22) leading into the open.

6. An agricultural working machine according to claim 2, claim 3 or claim 4 **characterised in that** the heat-insulating housing (6) has an opening closable by a cover or a flap (7).

7. An agricultural working machine according to claim 6 **characterised in that** the cover or the flap (7) is arranged exposed on the bodywork of the working machine.

8. An agricultural working machine according to one of claims 1 to 7 **characterised in that** the assembly to be cooled includes an electronic sensor, in particular a camera.

9. An agricultural working machine according to claim 7 **characterised in that** the sensor is arranged at a crop material passage of the working machine in order to detect a parameter of the crop material.

10. An agricultural working machine according to one of the preceding claims **characterised in that** it is a combine harvester, a forage harvester or a tractor (1).

## Revendications

1. Machine de travail agricole comprenant une cabine de conduite (4) et une climatisation, laquelle englobe un évaporateur (11) refroidissant la cabine de conduite, un condenseur (9) cédant de la chaleur et un compresseur (8), et comprenant un boîtier (5) disposé sous la cabine de conduite, le boîtier (5) de la machine de travail agricole étant logé dans une partie inférieure d'une caisse de rangement (6), en ce que la caisse de rangement (6) englobe un compartiment (17) pour des pièces mobiles, en particulier pour de l'outillage, et est disposée sur une conduite de retour (12) menant de l'évaporateur (11) au compresseur (8).

2. Machine de travail agricole selon la revendication 1, **caractérisée en ce que** le groupe fonctionnel à refroidir comprend un boîtier thermo-isolant (6 ; 24), et la conduite de retour (12, 13) traverse le boîtier (14 ; 24) .

3. Machine de travail agricole selon la revendication 2, **caractérisée en ce que** le boîtier thermo-isolant (6) contient un ventilateur (18).

4. Machine de travail agricole selon la revendication 2 ou 3, **caractérisée en ce que** le boîtier thermo-isolant (6) contient un séparateur de condensat (19).

5. Machine de travail agricole selon la revendication 4, **caractérisée en ce que** le séparateur de condensat (19) est relié à une conduite de sortie (22) menant à l'air libre.

6. Machine de travail agricole selon la revendication 2, 3 ou 4, **caractérisée en ce que** le boîtier thermo-isolant (6) comporte une ouverture pouvant être fermée par l'intermédiaire d'un couvercle ou d'un volet (7) .

7. Machine de travail agricole selon la revendication 6, **caractérisée en ce que** le couvercle ou le volet (7) est monté apparent sur la carrosserie de la machine de travail.

8. Machine de travail agricole selon une des revendications 1 à 7, **caractérisée en ce que** le groupe fonctionnel à refroidir comprend un capteur électronique, en particulier une caméra.

9. Machine de travail agricole selon la revendication 7, **caractérisée en ce que** le capteur est disposé sur un canal de produit récolté pour détecter un paramètre du produit récolté.

10. Machine de travail agricole selon une des revendications précédentes, **caractérisée en ce qu'**elle est une moissonneuse-batteuse, une ensileuse ou un tracteur (1).
